(19) **Europäisches Patentamt European Patent Office Office européen des brevets**

(11) **EP 4 194 267 B1**

(12) **FASCICULE DE BREVET EUROPEEN**

(45) Date de publication et mention de la délivrance du brevet:
**27.08.2025 Bulletin 2025/35**

(21) Numéro de dépôt: **22207442.9**

(22) Date de dépôt: **15.11.2022**

(51) Classification Internationale des Brevets (IPC):
*B60Q 1/00* (2006.01)  *F21S 41/13* (2018.01)
*F21S 41/33* (2018.01)  *G01S 7/481* (2006.01)
*G01S 17/894* (2020.01)  *G01S 17/931* (2020.01)

(52) Classification Coopérative des Brevets (CPC):
**B60Q 1/0023; F21S 41/13; F21S 41/333; G01S 7/4812; G01S 7/4813; G01S 17/894; G01S 17/931;** F21S 41/148

(54) **MODULE D'ÉCLAIRAGE POUR VÉHICULE AUTOMOBILE ÉQUIPÉ D'UNE FONCTION DE TÉLÉMÉTRIE**

BELEUCHTUNGSMODUL FÜR EIN KRAFTFAHRZEUG MIT ENTFERNUNGSMESSFUNKTION

LIGHTING MODULE FOR A MOTOR VEHICLE EQUIPPED WITH A TELEMETRY FUNCTION

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **10.12.2021 FR 2113258**

(43) Date de publication de la demande:
**14.06.2023 Bulletin 2023/24**

(73) Titulaire: **Renault s.a.s 92100 Boulogne Billancourt (FR)**

(72) Inventeur: **CALAIS, Valère 78280 GUYANCOURT (FR)**

(56) Documents cités:
**DE-A1- 102017 109 905    US-B1- 10 766 401**

**Description**

L'invention a pour objet un module d'éclairage pour véhicule automobile équipé d'une fonction de télémétrie.

Habituellement, un module d'éclairage réalisant les fonctions de feux de croisement et/ou de route d'un véhicule est constitué de plusieurs diodes électroluminescentes (DEL ou LED en anglais) comme source de lumière et d'un ou plusieurs réflecteurs par fonction. Une lentille peut être ajoutée au réflecteur dans certains cas.

Par ailleurs, de plus en plus de véhicules sont équipés d'un système de télémétrie de type LIDAR (acronyme de « light detection and ranging » ou « laser imaging detection and ranging » - détection et estimation de la distance par la lumière ou par laser) permettant de mesurer une ou plusieurs distances en utilisant une impulsion laser. Ce type de système comprend typiquement une ou plusieurs sources laser et un récepteur sensible à la longueur d'onde du laser. Les rayons du laser sont orientés sur l'objet dont on veut mesurer la distance via un élément optique d'émission. Un élément optique de réception permet de collecter la lumière réfléchie par l'objet et de la concentrer sur le récepteur.

Dans la plupart des véhicules, le module d'éclairage et le système de télémétrie sont des modules distincts et séparés.

Toutefois, la performance de la portée du système de télémétrie, notamment de type LIDAR, est directement liée aux dimensions de l'optique du récepteur. Plus cette optique est grande, plus le détecteur reçoit de lumière. La performance de la fonction d'éclairage est également directement liée aux dimensions de l'élément optique. Plus cet élément optique est grand, plus il est possible de collecter de la lumière et l'envoyer sur la route. De plus, les zones éclairées et les zones dans lesquelles le système de télémétrie fait des mesures sont les mêmes. L'orientation et le dimensionnement des éléments optiques possèdent donc un grand nombre de points communs. Ainsi, la mutualisation des éléments optiques du système de télémétrie et d'un module d'éclairage peut permettre une augmentation de la dimension des éléments optiques afin d'améliorer la performance d'une part de l'éclairage et d'autre part du système de télémétrie (mesure plus fiable car moins perturbée par les saletés en surface extérieure du système). On connaît ainsi du document US10766401B1 un module d'éclairage pour véhicule automobile comprenant une source de lumière couplée à un réflecteur pour assurer une fonction d'éclairage suivant un premier chemin optique et un détecteur de télémétrie collectant via le même réflecteur une lumière laser. Bien que les faisceaux lumineux des deux fonctions suivent des chemins optiques différents, l'utilisation d'un seul et unique réflecteur peut nuire à la précision de la fonction télémétrie. La surface concave du réflecteur étant conçue principalement à la fois pour collecter de la lumière et l'envoyer sur la route pour la fonction d'éclairage et pour collecter le rayonnement laser et l'envoyer sur le détecteur, la totalité du rayonnement laser peut ne pas être envoyée entièrement sur l'objet à mesurer, de sorte qu'une partie de ce rayonnement laser n'est pas renvoyée par l'objet à mesurer au détriment de la précision de la mesure. Un autre module d'éclairage est connu du DE 10 2017 109905 A1.

Il existe donc un besoin pour améliorer la précision d'une fonction de télémétrie intégrée à un module d'éclairage.

A cet effet, il est proposé un module d'éclairage de véhicule automobile équipé d'une fonction de télémétrie, le module comprenant un boîtier fermé par une paroi transparente ou translucide à l'intérieur duquel sont logés : - au moins une source de lumière d'une fonction d'éclairage émettant des rayons lumineux suivant un premier chemin optique, - au moins une source de lumière de la fonction de télémétrie émettant des rayons lumineux suivant un deuxième chemin optique, - au moins un détecteur d'une fonction de télémétrie, notamment un seul détecteur, configuré pour détecter des rayons lumineux, notamment des rayons lumineux provenant d'au moins un objet à mesurer, - un unique réflecteur configuré pour réfléchir les rayons lumineux émis par l'au moins une source de lumière de la fonction d'éclairage suivant une direction d'éclairage et pour renvoyer des rayons lumineux provenant d'au moins un objet à mesurer situé sur la route en direction du détecteur.

Selon l'invention, les différentes sources de lumière et le détecteur sont situés dans un même plan focal du réflecteur et le réflecteur comporte au moins une zone spécifique de réflexion associée à chaque source de lumière de la fonction télémétrie, chaque zone spécifique présentant une orientation spécifique différente de l'orientation du reste du déflecteur et configurée pour renvoyer vers l'un des objets à mesurer le faisceau lumineux émis par la source de lumière associée de la fonction de télémétrie, notamment dans sa totalité.

Cet agencement permet d'envoyer la totalité du faisceau lumineux émis par chaque source de lumière associée de la fonction de télémétrie sur un objet à mesurer et d'améliorer ainsi la précision de la mesure de télémétrie. Du fait de l'orientation spécifique de chaque zone spécifique de réflexion, la surface du réflecteur devient ainsi irrégulière, chaque zone spécifique de réflexion faisant saillie du reste de la surface du réflecteur, lequel peut présenter une surface concave. Selon l'invention, chaque zone spécifique de réflexion présente une surface concave distincte d'une surface concave du reste du réflecteur, d'orientation différente. Cette surface concave présente en outre des dimensions spécifiques correspondant aux dimensions de l'intersection du faisceau lumineux émis par l'au moins une source de lumière associée avec la surface du réflecteur.

Ceci peut être mis en œuvre aussi bien dans les modules d'éclairage ne comprenant qu'un seul élément optique (le réflecteur) que dans les modules d'éclairages comprenant plusieurs éléments optiques, typiquement un réflecteur et au moins une lentille. Ainsi, dans un mode de réalisation, le module d'éclairage comprend en outre, à l'intérieur du boîtier, au moins une lentille située entre le réflecteur et la paroi transparente et translucide.

Avantageusement, chaque zone spécifique de réflexion peut présenter :

- une surface définie par l'intersection d'une surface concave du réflecteur avec le faisceau lumineux émis par la source de lumière de la fonction télémétrique associée,
- un centre défini comme le point d'intersection d'une première direction avec ladite surface concave du réflecteur, cette première direction correspondant à la direction du faisceau lumineux émis par la source de lumière de la fonction télémétrique associée.

L'orientation d'une zone spécifique correspond alors à une droite normale à la surface de cette zone spécifique, qui est la bissectrice de l'angle formé entre la première direction et une deuxième direction, la deuxième direction étant définie comme (i) une direction reliant un objet à mesurer au centre de la surface lorsque le module d'éclairage est dépourvu de lentille ou (ii) une direction passant par le centre et qui est la transformée d'une direction reliant le centre optique de l'au moins une lentille à l'objet à mesurer par la fonction de transfert optique de ladite lentille lorsque le module d'éclairage est pourvu d'au moins une lentille.

Le module d'éclairage peut comprendre au moins deux sources de lumière de la fonction de télémétrie et le réflecteur comprendre une zone spécifique de réflexion associée à chacune de ces sources de lumière. Ceci peut permettre de viser des objets à mesurer différents, autrement dit de mesurer les distances d'objets situés dans des directions différentes, par exemple un objet situé au dessus de l'horizon et un objet situé en dessous de l'horizon.

Ainsi, dans un mode de réalisation, le module d'éclairage peut comprendre au moins deux sources de lumière de la fonction de télémétrie et le réflecteur comprend alors (i) au moins une zone spécifique de réflexion associée à l'une des sources de lumière et orientée pour renvoyer le faisceau lumineux émis vers l'un des objets à mesurer et (ii) au moins une autre zone spécifique de réflexion associée à une autre des sources de lumière et orientée, pour renvoyer le faisceau lumineux émis vers un autre des objets à mesurer.

Il est notamment possible de prévoir une ou plusieurs sources de lumière et zones spécifiques de réflexion associées pour mesurer la distance d'un premier objet et une ou plusieurs autres sources de lumière et zones spécifiques de réflexion associées pour mesurer la distance d'un deuxième objet.

Afin de simplifier la fabrication du module et son encombrement, le module d'éclairage peut comprendre une unique carte électronique de contrôle et l'au moins une source de lumière de la fonction d'éclairage, l'au moins une source de la fonction de télémétrie et le détecteur sont alors fixés et reliés électriquement à la carte électronique de contrôle, notamment du côté d'une même face de la carte électronique de contrôle.

Typiquement, l'au moins une source de lumière de la fonction d'éclairage est une diode électroluminescente et l'au moins une source de la fonction de télémétrie est une diode laser, cette dernière émettant par exemple des impulsions de lumière infra rouge. Le détecteur peut être un détecteur photosensible, par exemple de type photonique, convertissant des photons en électrons.

L'invention a également pour objet un procédé de fabrication d'un module d'éclairage selon l'invention, comprenant :

(A) une étape de détermination de l'au moins une zone spécifique de réflexion du réflecteur, dans laquelle, pour un réflecteur présentant une surface concave prédéfinie, pour chaque source de lumière de la fonction de télémétrie :

(a) on détermine une surface définie par l'intersection de la surface concave du réflecteur avec le faisceau lumineux émis par la source de lumière de la fonction télémétrique associée,

(b) on détermine le centre de ladite zone comme le point d'intersection d'une première direction avec ladite surface concave du réflecteur, cette première direction correspondant à la direction du faisceau lumineux émis par la source de lumière de la fonction télémétrique associée,

(c) on détermine l'orientation de ladite zone de sorte que la normale à la surface de la zone passant par le centre soit la bissectrice entre la première direction et une deuxième direction, la deuxième direction étant définie comme (i) une direction reliant un objet à mesurer au centre de la surface lorsque le module d'éclairage est dépourvu de lentille ou (ii) une direction passant par le centre qui est la transformée d'une direction reliant le centre optique de l'au moins une lentille à l'objet à mesurer par la fonction de transfert optique de ladite lentille lorsque le module d'éclairage est pourvu d'au moins une lentille,

(B) une étape de fabrication d'un réflecteur, dans laquelle on réalise un réflecteur présentant la forme concave prédéfinie et au moins une zone spécifique de réflexion dont la position et la surface sont définies par le centre déterminé à l'étape (b) et la surface déterminée à l'étape (a) et dont l'orientation est l'orientation déterminée à l'étape (c), le réflecteur présentant une surface irrégulière, chaque zone spécifique de réflexion faisant saillie du reste de la surface du réflecteur. Cette orientation est ainsi différente de l'orientation du reste de la surface du réflecteur.

Ces étapes peuvent être mises en œuvre pour un module d'éclairage dans lequel les positions de chaque source, du réflecteur et du détecteur sont prédéfinies, et la surface du réflecteur, typiquement concave, est prédéfinie.

Dans un mode de réalisation, le procédé de fabrication peut comprendre, préalablement aux étapes (A) et (B),

- une étape de positionnement au cours de laquelle on positionne l'au moins une source de lumière d'une fonction d'éclairage sur une carte électronique de contrôle et on positionne le réflecteur de manière à réaliser ladite fonction d'éclairage suivant un premier chemin optique, notamment de manière à réfléchir les rayons lumineux émis par l'au moins une source de lumière de la fonction d'éclairage suivant le premier chemin optique,
- une étape de détermination de la position d'un objet à mesurer, notamment où l'on détermine si l'objet à mesurer est au dessus ou en dessous de l'horizon,
- une étape de positionnement du détecteur de la fonction télémétrie sur la carte électronique de contrôle, notamment en une position recevant des rayons lumineux réfléchis par le détecteur et provenant de l'au moins un objet à mesurer situé sur la route, et,
- l'étape (A) de détermination est mise en œuvre en plaçant l'au moins une source de lumière de la fonction de télémétrie en une position libre de la carte électronique de contrôle.

Notamment, on peut choisir de positionner le détecteur en une position de la carte électronique suffisamment éloignée de l'au moins une source de lumière de la fonction d'éclairage pour éviter un échauffement du détecteur.

L'étape (A) peut également être mise en œuvre de manière à positionner l'au moins une source de lumière de la fonction télémétrie à une distance suffisante du détecteur pour éviter son échauffement.

Dans un autre mode de réalisation, le procédé de fabrication peut en outre comprendre, préalablement aux étapes (A) et (B),

- une étape de positionnement sur une carte électronique de contrôle de l'au moins une source de lumière d'une fonction d'éclairage, du détecteur de la fonction télémétrie et de l'au moins une source de lumière de la fonction de télémétrie,
- une étape de positionnement du réflecteur de manière à réaliser ladite fonction d'éclairage et de mesure par télémétrie, notamment de manière à réfléchir les rayons lumineux émis par l'au moins une source de lumière de la fonction d'éclairage suivant un premier chemin optique et pour renvoyer des rayons lumineux provenant d'au moins un objet à mesurer situé sur la route en direction du détecteur,
- une étape de détermination de la position de l'objet à mesurer, notamment où l'on détermine si l'objet à mesurer est au dessus ou en dessous de l'horizon.

Ceci permet d'adapter la ou les zones spécifiques de réflexion à un objet à mesurer pour une même carte électronique. Dit autrement, pour différentes applications et types d'objets à mesurer, on peut ainsi utiliser une seule même carte électronique sur laquelle les sources de lumière et le détecteur sont toujours aux mêmes positions et ne modifier que le réflecteur et plus particulièrement la ou les zones spécifiques de réflexion.

L'invention concerne enfin un véhicule automobile comprenant au moins un module d'éclairage selon l'invention ou obtenu par le procédé de fabrication selon l'invention.

L'invention est maintenant décrite en référence aux dessins annexés, non limitatifs, dans lesquels :

La [Fig. 1] représente une vue schématique de côté d'un module d'éclairage selon un mode de réalisation,
La [Fig. 2] représente une vue schématique de côté d'un module d'éclairage selon un autre mode de réalisation,
La [Fig. 3] représente une vue schématique agrandie de côté du réflecteur du module d'éclairage représenté figure 1,
La [Fig. 4] représente une vue schématique agrandie de face du réflecteur du module d'éclairage représenté figure 1.
La [Fig. 5] représente une vue schématique de côté d'un module d'éclairage selon un autre mode de réalisation.

Sur les figures, les mêmes éléments sont désignés par les mêmes références.

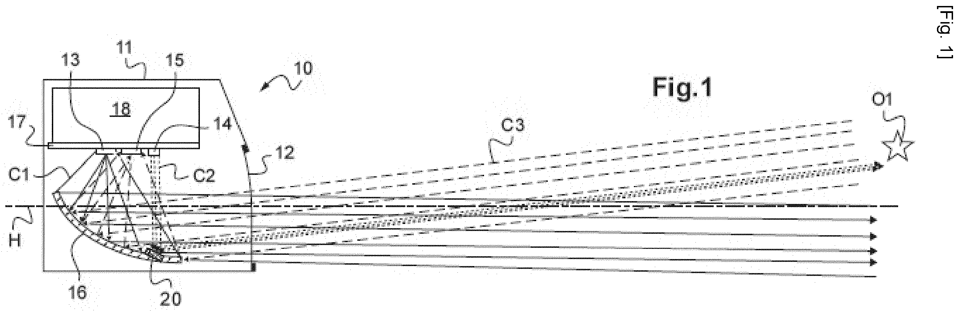

La figure 1 représente schématiquement un module d'éclairage 10 comprenant un boîtier 11 fermé par une paroi 12 transparente ou translucide.

A l'intérieur du boîtier 11 sont logés

- au moins une source de lumière 13, ici une seule, d'une fonction d'éclairage émettant des rayons lumineux suivant un premier chemin optique C1,
- au moins une source de lumière 14, ici une seule, de la fonction de télémétrie émettant des rayons lumineux suivant un deuxième chemin optique C2,
- au moins un détecteur 15 de la fonction de télémétrie configuré pour détecter des rayons lumineux,
- un unique réflecteur 16 configuré pour réfléchir les rayons lumineux émis par l'au moins une source de lumière de la fonction d'éclairage suivant une direction d'éclairage et pour renvoyer des rayons lumineux provenant d'au moins un objet O1 à mesurer situé sur la route en direction du détecteur.

L'objet O1 est ici situé au dessus de l'horizon H.

Le réflecteur 16 présente typiquement une surface concave, dont la forme est calculée de manière à réfléchir les rayons lumineux émis par la source de lumière 13 de la fonction d'éclairage suivant le premier chemin optique et pour renvoyer des rayons lumineux provenant de l'objet à mesurer O1 situé sur la route en direction du détecteur 15. Sur la figure 1, le chemin optique suivi par les rayons lumineux provenant de l'objet O1 sont désignés par la référence O1. Les différentes sources de lumière 13, 14 et le détecteur 15 sont situés dans un même plan focal du réflecteur, ici sur une même carte électronique 17, notamment du côté d'une même face de celle-ci. Cette carte électronique est ici montée sur un dispositif de dissipation de chaleur 18 et alimente donc chacun des éléments 13, 14, 15.

Le réflecteur 16 comporte en outre une zone spécifique de réflexion 20 associée à la source de lumière 14 de la fonction télémétrie, cette zone spécifique présentant une orientation spécifique n différente de l'orientation du reste du déflecteur et configurée pour renvoyer vers l'objet O1 à mesurer le faisceau lumineux émis par la source de lumière 14, notamment la totalité de ce faisceau lumineux.

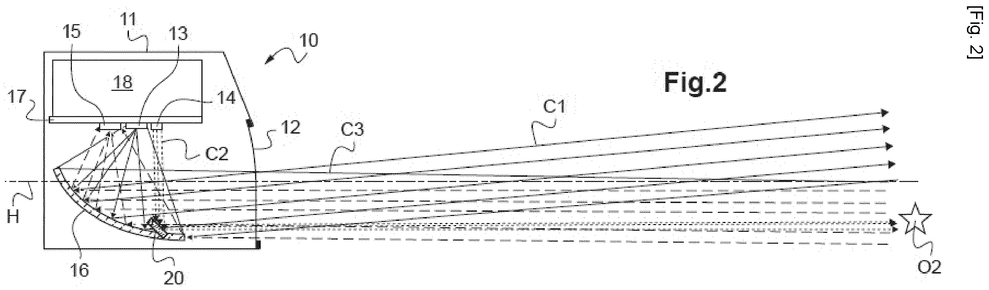

La figure 2 ne diffère de la figure 1 que par la position de l'objet à mesurer désigné ici par la référence O2 et situé sous l'horizon H.

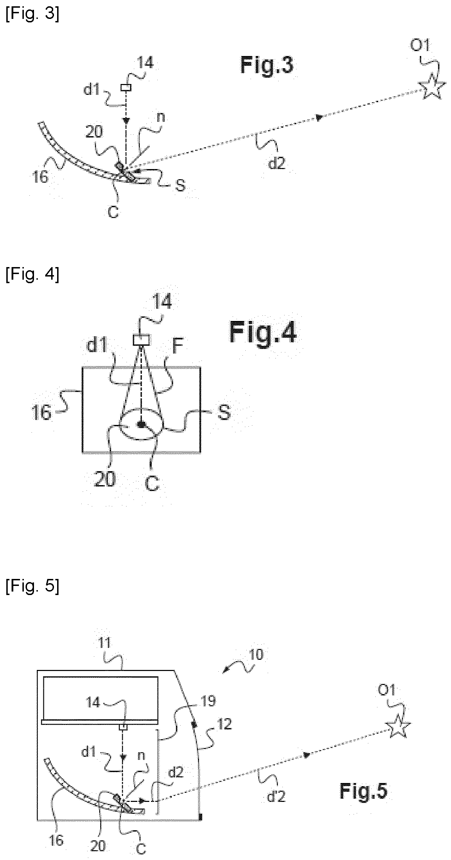

La figure 5 ne diffère de la figure 1 que par la présence d'une lentille 19 à l'intérieur du boîtier 11, entre le réflecteur 16 et la paroi transparente ou translucide 12.

Quelque soit le mode de réalisation, chaque zone spécifique de réflexion 20 présente, tel que visible sur les figures 3 et 4 :

- une surface S définie par l'intersection d'une surface concave du réflecteur 16 avec le faisceau lumineux F émis par la source de lumière de la fonction télémétrique associée, autrement dit avec le cône de lumière du faisceau lumineux,
- un centre C défini comme le point d'intersection d'une première direction d1 avec ladite surface concave du réflecteur 16, cette première direction correspondant à la direction du faisceau lumineux émis par la source de lumière de la fonction télémétrique associée, à savoir l'axe du faisceau lumineux.

L'orientation n de la zone spécifique 20 correspond alors à une droite normale à la surface de cette zone spécifique, qui est la bissectrice de l'angle formé entre la première direction d1 et une deuxième direction d2. Dans les exemples des figures 1 et 2, la deuxième direction est définie comme une direction reliant l'objet à mesurer (O1 ou O2) au centre C de la surface. Dans l'exemple de la figure 5, cette deuxième direction d2 est une direction passant par le centre C et qui est la transformée d'une direction d'2 reliant le centre optique de la lentille 19 à l'objet à mesurer par la fonction de transfert optique de cette lentille.

On comprend ainsi que la totalité de la source lumineuse 14 est envoyée par la zone spécifique vers l'objet à mesurer et que la zone spécifique, du fait de son orientation particulière, définit une surface en saillie par rapport au reste de la surface concave du réflecteur, tel que visible sur les figures.

On notera que dans le cas où l'objet à mesurer est situé au dessus de l'horizon (figures 1, 3, 5), on peut combiner le système de télémétrie avec une fonction d'éclairage de feux de croisement. Dans le cas où l'objet à mesurer est situé en dessous de l'horizon (figure 2), on peut combiner le système de télémétrie avec une fonction d'éclairage de feux de route.

Cette distinction permet d'utiliser la même optique et la même carte électronique pour les fonctions éclairage et de télémétrie.

L'invention permet d'exploiter une propriété des optiques stigmatiques : les rayons de lumière venant de l'infini (>10m) se focalisent dans un plan appelé le plan focal. Dans l'invention, la ou les sources de lumière de la fonction d'éclairage sont dans ce plan focal, de même que tous les autres composants positionnés sur la carte électronique. Chaque point dans le plan focal d'une optique correspond à une direction particulière pour la lumière venant de l'infini. Donc, dans le cas des feux de croisement, la lumière étant sous l'horizon la partie correspondante dans le plan focal est la source de lumière de la fonction d'éclairage. La lumière rétrodiffusée par l'objet (qui est hors zone éclairée) va se concentrer à coté de la source de lumière de la fonction d'éclairage dans le plan focal, où on peut placer le détecteur.

La source de lumière de la fonction de télémétrie est placée sur la même carte électronique que la source de lumière de la fonction d'éclairage et le détecteur. Cette source de lumière n'a besoin que d'une toute petite surface optique plane (afin de garder les propriétés de la lumière du LASER) de l'ordre de quelques mm$^2$, la zone spécifique est orientée de sorte que sa normale soit la bissectrice entre l'axe du Laser venant du composant électronique et l'axe du laser désiré en sortie.

Dans le cas de l'intégration d'une fonction de télémétrie, typiquement de type LIDAR, dans un module d'éclairage ayant comme fonctionnalité principale de réaliser la ou les fonctions de feux de croissement et feux de route, on pourra procéder de la manière décrite ci-après pour adapter la forme et les dimensions de la ou des zones spécifiques de réflexion du réflecteur.

Deux cas peuvent être envisagés :

- une unique source de lumière pour la fonction de télémétrie qui va mesurer un unique objet (télémétrie mono-point).
- une pluralité de sources de lumière pour la fonction de télémétrie, qui va mesurer en simultanée une série de points objets (par exemple utilisation d'une source de type VCSEL : Diode laser à cavité verticale émettant par la surface). On notera que l'utilisation d'une pluralité de sources de lumière pour la fonction de télémétrie permet de mesurer des points objets situés au dessus de l'horizon et des points objets situés en dessous de l'horizon dans un même module d'éclairage.

Pour chacun des cas, le module d'éclairage peut présenter une lentille 19 ou non. Dans le cas d'un module d'éclairage sans lentille, on parle d'un module mono composant optique comportant typiquement un réflecteur en forme de bol avec une surface lisse ou facettée. Dans le cas d'un module d'éclairage avec lentille, on parle d'un module multi composants optiques comportant typiquement un réflecteur elliptique (premier composant) et d'une lentille en matière transparente (second composant).

Donc il y a ainsi quatre configurations principales, pour lesquelles on a détaillé ci-après comment adapter la surface optique afin que la partie émission du système de télémétrie soit la plus efficace possible en impactant le moins possible les fonctions d'éclairage.

Les sources sont des composants électroniques qui sont soudés sur une même carte électronique (circuit imprimé). Les faisceaux lumineux (direction de la lumière moyenne) des différentes sources sont émis de manière orthogonale à la carte électronique.

On considère en outre que la paroi 12 transparente ou translucide du module d'éclairage est calculée pour avoir une puissance optique la plus neutre possible. Si ce n'est pas le cas, on peut alors la considérer comme un élément optique supplémentaire.

1) Télémétrie mono-point avec un système mono-optique

La source de lumière 14 de la fonction télémétrie est par exemple un LASER qui est une source de lumière collimatée (tout les rayons sont quasi-parallèles) qui envoie un faisceau lumineux de manière orthogonale à la carte électronique sur laquelle est aussi soudée la ou les LEDs de la fonction d'éclairage et envoyant sa lumière du même coté que les LEDs.

Le composant optique du module d'éclairage est le réflecteur concave 16 lisse ou facetté dont l'orientation de la surface ou des facettes est calculé afin de réaliser la distribution de lumière ou une part de la distribution de lumière d'une ou des fonctions d'éclairage en réfléchissant la lumière d'une ou plusieurs sources lumineuses 13, typiquement des LEDs. Nous ne préciserons pas ici le calcul de cette surface concave, bien connu de l'homme du métier.

La zone du réflecteur spécifique à modifier (notée S) est déterminée par l'intersection de la surface concave du réflecteur 16 (avant modification) et du faisceau lumineux du LASER (noté F). Le centre (noté C) est donné par l'axe (noté d1) du LASER.

On pourra déterminer les dimensions de la zone soit en utilisant la divergence du LASER qui est donnée par le fabricant de la source LASER ou bien par calcul du Waist du faisceau LASER donné par l'équation 1:

[Math 1]

$$w(z) = w_0 \sqrt{1 + (\frac{z}{z_0})^2}$$

Avec :

- z l'axe de propagation du LASER
- w(z) la largeur du faisceau à la position z
- $w_0$ la largeur du faisceau en sortir du composant (valeur minimale)
- $z_0$ l'origine de l'axe z défini par l'équation 2 :

[Math 2]
$$z_0 = \frac{\pi w_0^2}{\lambda}$$

Où λ est la longueur d'onde centrale du LASER.

Une fois identifiée la zone S du réflecteur à modifier, on détermine son orientation n de la manière suivante : la normale n à la surface de la zone 20 est orientée de manière à être la bissectrice de l'angle formé par la première direction notée d1 et une deuxième direction notée d2.

La deuxième direction d2 est la direction du point que l'on souhaite mesurer. Il s'agit de la droite passant par le centre C et par le point (l'objet) que l'on souhaite mesurer.

On notera que si d2 passe par un élément solide du module d'éclairage pouvant bloquer la lumière, il est possible de déplacer le point C le long de la première direction d1. On peut également translater le point C en raison de contraintes de fabrication.

## 2) Télémétrie multipoints avec un système mono-optique

Les notations sont identiques au cas précédent.

Ici la source de la fonction de télémétrie est un VCSEL qui est une matrice de LASERs qui peuvent être parallèles ou divergents entre eux.

Le principe est le même que dans le cas précédent sauf sur les points suivants:

- Les dimensions de la surface S sont définies par les LASERs les plus extérieurs du VCSEL avec la même méthode que pour un LASER seul. On ne conservera que la limite extérieure de manière à obtenir une forme convexe au sens mathématique.
- d2 est définie de la même manière que pour le LASER mais en faisant correspondre chaque point/direction de mesure à un des LASERs du VCSEL.

Le calcul de l'orientation n de chaque zone 20 est identique mais l'on prend les directions d1 et d2 propres à chaque LASER. Donc, on a une zone spécifique 20 définie par chaque LASER individuellement, présentant son orientation propre.

Ces zones spécifiques étant contigües, elles peuvent former une surface facettée (chaque zone correspondant à une facette) dont le nombre de facettes est au moins égal au nombre de points de mesure, chaque facette étant orientée comme expliqué au-dessus, ou elles peuvent former une surface lisse avec des sous zones correspondant aux sous zones de chaque LASER et orientées individuellement selon leur direction propre.

## 3) Télémétrie mono-point avec un système multi-optiques (figure 5)

Le premier composant optique est un réflecteur 16 comme en 1).

La différence se fait sur la direction d2 utilisée dans le calcul, ici la direction d2 passe toujours par C mais ce n'est pas directement la direction /point de mesure qui donne cette direction d2.

Dans ce cas, on ne pourra faire que la mesure dans une direction, ce qui correspond à un point éloigné de l'optique. Le point de mesure sera donc à une distance très grande devant le diamètre de la lentille du système optique de manière que la variation d'angle entre 2 rayons venant chacun d'une extrémité de la lentille vers un point de mesure soit négligeable. Ceci permet, à partir du point de mesure éloigné et du centre C de la lentille 19, d'obtenir une bonne approximation de la direction de mesure, notée d'2.

La ou les éléments optiques entre C et la sortie du système peuvent se résumer par une fonction qui transforme une direction (coté objet) en une autre direction (coté image) appelé Fonction de Transfert Optique (notée FTO).

La FTO est connue car elle sert au calcul de la photométrie de la fonction d'éclairage. On peut également l'obtenir via les lois de Snell-Descartes et de la réflexion.

Connaissant la direction de mesure d'2 coté image et la FTO, on peut déterminer la direction coté objet par principe de retour inverse de la lumière.

La direction coté objet passant par le point C définit alors la direction d2. L'orientation n est alors déterminée tel qu'expliqué au point 1).

## 4) LIDAR multipoints avec un système multi-optiques.

On procède alors tel que décrit au point 2) mais avec la méthode de calcul des directions d2 de chaque LASER du VSCEL décrite au point 3).

L'invention est particulièrement adaptée à une fonction de télémétrie de type LIDAR, de préférence autre qu'un LIDAR à balayage, ce dernier nécessitant des composants optiques supplémentaires rendant plus complexe leur intégration dans un module d'éclairage.

**Revendications**

1. Module d'éclairage (10) de véhicule automobile équipé d'une fonction de télémétrie, le module comprenant un boîtier (11) fermé par une paroi (12) transparente ou translucide à l'intérieur duquel sont logés : - au moins une source de lumière (13) d'une fonction d'éclairage émettant des rayons lumineux suivant un premier chemin optique, - au moins une source de lumière (14) de la fonction de télémétrie émettant des rayons lumineux suivant un deuxième chemin optique, - au moins un détecteur (15) de la fonction de télémétrie configuré pour détecter des rayons lumineux, - un unique réflecteur (16) configuré pour réfléchir les rayons lumineux émis par l'au moins une source de lumière de la fonction d'éclairage suivant une direction d'éclairage et pour renvoyer des rayons lumineux provenant d'au moins un objet à mesurer situé sur la route en direction du détecteur, les différentes sources de lumière et le détecteur étant situés dans un même plan focal du réflecteur et le réflecteur (16) comportant au moins une zone spécifique de réflexion (20) associée à chaque source de lumière (14) de la fonction télémétrie, chaque zone spécifique (20) présentant une orientation spécifique différente de l'orientation du reste du déflecteur et configurée pour renvoyer vers l'un des objets à mesurer le faisceau lumineux émis par la source de lumière associée de la fonction de télémétrie, **caractérisé en ce que** le réflecteur présente une surface irrégulière, chaque zone spécifique de réflexion faisant saillie du reste de la surface du réflecteur.

2. Module d'éclairage (10) de véhicule automobile selon la revendication 1 comprenant en outre, à l'intérieur du boîtier (11), au moins une lentille (19) située entre le réflecteur (16) et la paroi (12) transparente et translucide.

3. Module d'éclairage (10) de véhicule automobile selon la revendication 1 ou 2, dans lequel chaque zone spécifique de réflexion présente : - une surface définie par l'intersection d'une surface concave du réflecteur avec le faisceau lumineux émis par la source de lumière de la fonction télémétrique associée, - un centre défini comme le point d'intersection d'une première direction avec ladite surface concave du réflecteur, cette première direction correspondant à la direction du faisceau lumineux émis par la source de lumière de la fonction télémétrique associée, et l'orientation d'une zone spécifique correspond à une droite normale à la surface de cette zone spécifique, qui est la bissectrice de l'angle formé entre la première direction et une deuxième direction, la deuxième direction étant définie comme (i) une direction reliant un objet à mesurer au centre de la surface lorsque le module d'éclairage est dépourvu de lentille ou (ii) une direction passant par le centre et qui est la transformée d'une direction reliant le centre optique de l'au moins une lentille à l'objet à mesurer par la fonction de transfert optique de ladite lentille lorsque le module d'éclairage est pourvu d'au moins une lentille.

4. Module d'éclairage (10) de véhicule automobile selon l'une quelconque des revendications précédentes comprenant au moins deux sources de lumière de la fonction de télémétrie et le réflecteur comprend (i) au moins une zone spécifique de réflexion associée à l'une des sources de lumière et orientée pour renvoyer le faisceau lumineux émis vers l'un des objets à mesurer et (ii) au moins une autre zone spécifique de réflexion associée à une autre des sources de lumière et orientée pour renvoyer le faisceau lumineux émis vers un autre des objets à mesurer.

5. Module d'éclairage (10) de véhicule automobile selon l'une quelconque des revendications précédentes, **caractérisé en ce qu'**il comprend une unique carte électronique de contrôle (17) et **en ce que** l'au moins une source de lumière de la fonction d'éclairage, l'au moins une source de la fonction de télémétrie et le détecteur sont fixés et reliés électriquement à la carte électronique de contrôle.

6. Procédé de fabrication d'un module d'éclairage selon l'une quelconque des revendications précédentes, comprenant :

(A) une étape de détermination de l'au moins une zone spécifique de réflexion du réflecteur, dans laquelle, pour un réflecteur présentant une surface concave prédéfinie, pour chaque source de lumière de la fonction de télémétrie :

(a) on détermine une surface définie par l'intersection de la surface concave du réflecteur avec le faisceau lumineux émis par la source de lumière de la fonction télémétrique associée,
(b) on détermine le centre de ladite zone comme le point d'intersection d'une première direction avec ladite surface concave du réflecteur, cette première direction correspondant à la direction du faisceau lumineux émis par la source de lumière de la fonction télémétrique associée,
(c) on détermine l'orientation de ladite zone de sorte que la normale à la surface de la zone passant par le centre soit la bissectrice entre la première direction et une deuxième direction, la deuxième direction étant définie comme (i) une direction reliant un objet à mesurer au centre de la surface lorsque le module d'éclairage est dépourvu de lentille ou (ii) une direction passant par le centre qui est la transformée d'une direction reliant le centre optique de l'au moins une lentille à l'objet à mesurer par la fonction de transfert optique de ladite lentille lorsque le module d'éclairage est pourvu d'au moins une lentille,

(B) une étape de fabrication d'un réflecteur, dans laquelle on réalise un réflecteur présentant la forme concave prédéfinie et au moins une zone spécifique de réflexion dont la position et la surface sont définies par le centre déterminé à l'étape (b) et la surface déterminée à l'étape (a) et dont l'orientation est l'orientation déterminée à l'étape (c), le réflecteur présentant une surface irrégulière, chaque zone spécifique de réflexion faisant saillie du reste de la surface du réflecteur.

7. Procédé de fabrication selon la revendication 6, comprenant en outre, préalablement aux étapes (A) et (B), - une étape de positionnement au cours de laquelle on positionne l'au moins une source de lumière d'une fonction d'éclairage sur une carte électronique de contrôle et on positionne le réflecteur de manière à réaliser ladite fonction d'éclairage suivant un premier chemin optique, - une étape de détermination de la position d'un objet à mesurer, - une étape de positionnement du détecteur de la fonction télémétrie sur la carte électronique de contrôle, - une étape de positionnement du réflecteur de manière à réaliser ladite fonction d'éclairage et la fonction de télémétrie et, - l'étape (A) de détermination est mise en œuvre en plaçant l'au moins une source de lumière de la fonction de télémétrie en une position libre de la carte électronique de contrôle.

8. Procédé de fabrication selon la revendication 6, comprenant en outre, préalablement aux étapes (A) et (B), - une étape de positionnement sur une carte électronique de contrôle de l'au moins une source de lumière d'une fonction d'éclairage, du détecteur de la fonction télémétrie et de l'au moins une source de lumière de la fonction de télémétrie, - une étape de positionnement du réflecteur de manière à réaliser ladite fonction d'éclairage et de mesure par télémétrie - une étape de détermination de la position de l'objet à mesurer.

9. Véhicule automobile comprenant au moins un module d'éclairage selon l'une des revendications 1 à 5.

**Patentansprüche**

1. Beleuchtungsmodul (10) für ein Kraftfahrzeug, das mit einer Telemetriefunktion ausgestattet ist, wobei das Modul ein Gehäuse (11) umfasst, das durch eine transparente oder transluzente Wand (12) verschlossen wird und in dessen Inneren aufgenommen sind:

- mindestens eine Lichtquelle (13) einer Beleuchtungsfunktion, die Lichtstrahlen entlang eines ersten optischen Pfads emittiert,
- mindestens eine Lichtquelle (14) einer Telemetriefunktion, die Lichtstrahlen entlang eines zweiten optischen Pfads emittiert,
- mindestens ein Detektor (15) der Telemetriefunktion, der dazu ausgestaltet ist, Lichtstrahlen zu detektieren,
- ein einziger Reflektor (16), der dazu ausgestaltet ist, die von der mindestens einen Lichtquelle der Beleuchtungsfunktion emittierten Lichtstrahlen entlang einer Beleuchtungsrichtung zu reflektieren und von mindestens einem auf der Straße gelegenen zu messenden Objekt kommende Lichtstrahlen in Richtung des Detektors umzulenken, wobei die verschiedenen Lichtquellen und der Detektor in einer selben Brennebene des Reflektors gelegen sind und wobei der Reflektor (16) mindestens einen spezifischen Reflexionsbereich (20) umfasst, der jeder Lichtquelle (14) der Telemetriefunktion zugeordnet ist, wobei jeder spezifische Bereich (20) eine spezifische Ausrichtung aufweist, die von der Ausrichtung des Rests des Reflektors verschieden ist und dazu ausgestaltet ist, den von der der Telemetriefunktion zugeordneten Lichtquelle emittierten Lichtstrahl zu einem der zu messenden Objekte umzulenken, **dadurch gekennzeichnet, dass** der Reflektor eine unregelmäßige Oberfläche aufweist, wobei jeder spezifische Reflexionsbereich von dem Rest der Oberfläche des Reflektors absteht.

2. Beleuchtungsmodul (10) für ein Kraftfahrzeug nach Anspruch 1, umfassend ferner, im Inneren des Gehäuses (11), mindestens eine Linse (19), die zwischen dem Reflektor (16) und der transparenten und transluzenten Wand (12) gelegen ist.

3. Beleuchtungsmodul (10) für ein Kraftfahrzeug nach Anspruch 1 oder 2, wobei jeder spezifische Reflexionsbereich aufweist:

- eine Oberfläche, die durch den Schnitt einer konkaven Oberfläche des Reflektors mit dem von der Lichtquelle der zugeordneten Telemetriefunktion emittierten Lichtstrahl definiert wird,
- ein Zentrum, das als der Schnittpunkt einer ersten Richtung mit der konkaven Oberfläche des Reflektors definiert ist, wobei diese erste Richtung der Richtung des von der Lichtquelle der zugeordneten Telemetriefunktion emittierten Lichtstrahls entspricht und die Ausrichtung eines spezifischen Bereichs einer zu der Oberfläche dieses spezifischen Bereichs senkrechten Geraden entspricht, die die Halbierende des zwischen der ersten Richtung und einer zweiten Richtung gebildeten Winkels ist, wobei die zweite Richtung definiert ist als (i) eine Richtung, die ein zu messendes Objekt mit dem Zentrum der Oberfläche verbindet, wenn das Beleuchtungsmodul keine Linse aufweist, oder (ii) eine Richtung, die durch das Zentrum verläuft und die die Transformierte einer Richtung, die das optische Zentrum der mindestens einen Linse mit dem zu messenden Objekt verbindet, durch die optische Übertragungsfunktion der Linse ist, wenn das Beleuchtungsmodul mit mindestens einer Linse versehen ist.

4. Beleuchtungsmodul (10) für ein Kraftfahrzeug nach einem der vorhergehenden Ansprüche, das mindestens zwei Lichtquellen der Telemetriefunktion umfasst, und der Reflektor umfasst (i) mindestens einen spezifischen Reflexionsbereich, der einer der Lichtquellen zugeordnet ist und ausgerichtet ist, um den emittierten Lichtstrahl zu einem der zu messenden Objekte umzulenken, und (ii) mindestens einen anderen spezifischen Reflexionsbereich, der einer anderen der Lichtquellen zugeordnet ist und ausgerichtet ist, um den emittierten Lichtstrahl zu einem anderen der zu messenden Objekte umzulenken.

5. Beleuchtungsmodul (10) für ein Kraftfahrzeug nach einem der vorhergehenden Ansprüche, **dadurch gekennzeichnet, dass** es eine einzige elektronische Steuerplatine (17) umfasst und dass die mindestens eine Lichtquelle der Beleuchtungsfunktion, die mindestens eine Quelle der Telemetriefunktion und der Detektor an der elektronischen Steuerplatine befestigt und elektrisch damit verbunden sind.

6. Verfahren zur Herstellung eines Beleuchtungsmoduls nach einem der vorhergehenden Ansprüche, umfassend:

(A) einen Schritt des Ermittelns des mindestens einen spezifischen Reflexionsbereichs des Reflektors, bei dem bei einem Reflektor, der eine vorgegebene konkave Oberfläche aufweist, für jede Lichtquelle der Telemetriefunktion:

(a) eine Oberfläche ermittelt wird, die durch den Schnitt der konkaven Oberfläche des Reflektors mit dem von der Lichtquelle der zugeordneten Telemetriefunktion emittierten Lichtstrahl definiert wird,
(b) das Zentrum des Bereichs als der Schnittpunkt einer ersten Richtung mit der konkaven Oberfläche des Reflektors ermittelt wird, wobei diese erste Richtung der Richtung des von der Lichtquelle der zugeordneten Telemetriefunktion emittierten Lichtstrahls entspricht,
(c) die Ausrichtung des Bereichs so ermittelt wird, dass die Senkrechte zu der Oberfläche des Bereichs, die durch das Zentrum verläuft, die Halbierende zwischen der ersten Richtung und einer zweiten Richtung ist, wobei die zweite Richtung definiert ist als (i) eine Richtung, die ein zu messendes Objekt mit dem Zentrum der Oberfläche verbindet, wenn das Beleuchtungsmodul keine Linse aufweist, oder (ii) eine Richtung, die durch das Zentrum verläuft, die die Transformierte einer Richtung, die das optischen Zentrum der mindestens einen Linse mit dem zu messenden Objekt verbindet, durch die optische Übertragungsfunktion der Linse ist, wenn das Beleuchtungsmodul mit mindestens einer Linse versehen ist,

(B) einen Schritt des Herstellens eines Reflektors, bei dem ein Reflektor ausgeführt wird, der die vorgegebene konkave Form aufweist und mindestens einen spezifischen Reflexionsbereich, dessen Position und Oberfläche durch das im Schritt (b) ermittelte Zentrum und die im Schritt (a) ermittelte Oberfläche definiert werden und dessen Ausrichtung die im Schritt (c) ermittelte Ausrichtung ist, wobei der Reflektor eine unregelmäßige Oberfläche aufweist, wobei jeder spezifische Reflexionsbereich vom Rest der Oberfläche des Reflektors absteht.

7. Verfahren zur Herstellung nach Anspruch 6, umfassend ferner, vor den Schritten (A) und (B),

- einen Schritt des Positionierens, in dessen Verlauf die mindestens eine Lichtquelle einer Beleuchtungsfunktion auf einer elektronischen Steuerplatine positioniert wird und der Reflektor derart positioniert wird, dass er die Beleuchtungsfunktion entlang eines ersten optischen Pfads ausführt,
- einen Schritt des Ermittelns der Position eines zu messenden Objekts,
- einen Schritt des Positionierens des Detektors der Telemetriefunktion auf der elektronischen Steuerplatine,

- einen Schritt des Positionierens des Reflektors derart, dass er die Beleuchtungsfunktion und die Telemetriefunktion ausführt, und,
- der Schritt (A) des Ermittelns wird durchgeführt, indem die mindestens eine Lichtquelle der Telemetriefunktion an einer freien Position der elektronischen Steuerplatine angeordnet wird.

8. Verfahren zur Herstellung nach Anspruch 6, umfassend ferner, vor den Schritten (A) und (B),

- einen Schritt des Positionierens der mindestens einen Lichtquelle einer Beleuchtungsfunktion, des Detektors der Telemetriefunktion und der mindestens einen Lichtquelle der Telemetriefunktion auf einer elektronischen Steuerplatine,
- einen Schritt des Positionierens des Reflektors derart, dass er die Beleuchtungs- und Messfunktion durch Telemetrie ausführt
- einen Schritt des Ermittelns der Position des zu messenden Objekts.

9. Kraftfahrzeug, das mindestens ein Beleuchtungsmodul nach einem der Ansprüche 1 bis 5 umfasst.


**Claims**

1. Motor-vehicle lighting module (10) equipped with a range-finding function, the module comprising a housing (11) closed by a transparent or translucent wall (12) and inside of which are housed:

   - at least one light source (13) of a lighting function emitting light rays along a first optical path, - at least one light source (14) of the range-finding function emitting light rays along a second optical path, - at least one detector (15) of the range-finding function configured to detect light rays,
   - a single reflector (16) configured to reflect the light rays emitted by the at least one light source of the lighting function in a lighting direction and to steer light rays originating from at least one object to be measured located on the road in the direction of the detector, the various light sources and the detector being located in the same focal plane of the reflector and the reflector (16) comprising at least one specific reflection zone (20) associated with each light source (14) of the range-finding function, each specific zone (20) having a specific orientation that is different from the orientation of the rest of the deflector and that is configured to steer towards one of the objects to be measured the light beam emitted by the associated light source of the range-finding function, **characterized in that** the reflector has an irregular surface, each specific reflection zone protruding from the rest of the surface of the reflector.

2. Motor-vehicle lighting module (10) according to Claim 1, further comprising, inside the housing (11), at least one lens (19) located between the reflector (16) and the transparent and translucent wall (12).

3. Motor-vehicle lighting module (10) according to Claim 1 or 2, wherein each specific reflection zone has:

   - a surface defined by the intersection of a concave surface of the reflector with the light beam emitted by the light source of the associated range-finding function,
   - a centre defined as the point of intersection of a first direction with said concave surface of the reflector, this first direction corresponding to the direction of the light beam emitted by the light source of the associated range-finding function, and the orientation of a specific zone corresponds to a straight line normal to the surface of this specific zone, which is the bisector of the angle made between the first direction and a second direction, the second direction being defined as (i) a direction connecting an object to be measured to the centre of the surface when the lighting module is devoid of lens or (ii) a direction passing through the centre and which is the transform of a direction connecting the optical centre of the at least one lens to the object to be measured by the optical transfer function of said lens when the lighting module is provided with at least one lens.

4. Motor-vehicle lighting module (10) according to any of the preceding claims, comprising at least two light sources of the range-finding function and the reflector comprises (i) at least one specific reflection zone associated with one of the light sources and oriented so as to steer the emitted light beam towards one of the objects to be measured and (ii) at least one other specific reflection zone associated with another of the light sources and oriented so as to steer the emitted light beam towards another of the objects to be measured.

5. Motor-vehicle lighting module (10) according to any of the preceding claims, **characterized in that** it comprises a single electronic control board (17) and **in that** the at least one light source of the lighting function, the at least one source of the range-finding function and the detector are fastened and electrically connected to the electronic control board.

6. Process for manufacturing a lighting module according to any of the preceding claims, comprising:

(A) a step of determining the at least one specific reflection zone of the reflector, in which, for a reflector having a predefined concave surface, for each light source of the range-finding function:

(a) a surface defined by the intersection of the concave surface of the reflector with the light beam emitted by the light source of the associated range-finding function is determined,
(b) the centre of said zone is determined as the point of intersection of a first direction with said concave surface of the reflector, this first direction corresponding to the direction of the light beam emitted by the light source of the associated range-finding function,
(c) the orientation of said zone is determined so that the normal to the surface of the zone passing through the centre is the bisector between the first direction and a second direction, the second direction being defined as (i) a direction connecting an object to be measured to the centre of the surface when the lighting module is devoid of lens or (ii) a direction passing through the centre which is the transform of a direction connecting the optical centre of the at least one lens to the object to be measured by the optical transfer function of said lens when the lighting module is provided with at least one lens,

(B) a step of manufacturing a reflector, in which a reflector is produced that has the predefined concave shape and at least one specific reflection zone the position and surface of which are defined by the centre determined in step (b) and the surface determined in step (a) and the orientation of which is the orientation determined in step (c), the reflector having an irregular surface, each specific reflection zone protruding from the rest of the surface of the reflector.

7. Manufacturing process according to Claim **6,** further comprising, prior to steps (A) and (B),

- a positioning step in which the at least one light source of a lighting function is positioned on an electronic control board and the reflector is positioned so as to perform said lighting function along a first optical path,
- a step of determining the position of an object to be measured,
- a step of positioning the detector of the range-finding function on the electronic control board,
- a step of positioning the reflector so as to perform said lighting function and the range-finding function, and
- determining step (A) is implemented by placing the at least one light source of the range-finding function in a free position on the electronic control board.

8. Manufacturing process according to Claim 6, further comprising, prior to steps (A) and (B),

- a step of positioning on an electronic control board the at least one light source of a lighting function, the detector of the range-finding function and the at least one light source of the range-finding function,
- a step of positioning the reflector so as to perform said lighting function and range-finding measurement,
- a step of determining the position of the object to be measured.

9. Motor vehicle comprising at least one lighting module according to one of Claims 1 to 5.

Fig.1

EP 4 194 267 B1

[Fig. 1]

[Fig. 2]

Fig.2

[Fig. 3]

Fig.3

[Fig. 4]

Fig.4

[Fig. 5]

Fig.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 10766401 B1

- DE 102017109905 A1